# EUROPEAN PATENT APPLICATION

(11) **EP 2 216 225 A1**
(43) Date of publication of application: **11.08.2010**
(21) Application number: 10152732.3
(22) Date of filing: 05.02.2010
(51) Int. Cl.: B60W 30/08, B60W 10/18, B60W 10/20, B60W 10/04, B60R 21/0134

(54) **Autonomic vehicle safety system**

(30) Priority: 05.02.2009 US 366521
(71) Applicant: PACCAR INC, Bellevue, WA 98804 (US)
(72) Inventor: Mays, Wesley M., Coppel, Texas 75019 (US)
(74) Representative: Körber, Martin Hans

(57) **Abstract**

A vehicle safety system (100) is disclosed that monitors vehicle surroundings, operational conditions, etc., in order to identify potential safety concerns or hazardous operational conditions. In doing so, the vehicle safety system (100) collects data from one or more sources (140,150,156), such as sources (150) that generate data from the vehicle itself (e.g., internal sensors), sources (140) that generate data from the surroundings of the vehicle (e.g., external sensors), and sources (156) that receive data from local or remote locations with respect to the host vehicle (e.g., a satellite, telematics, cellular, short or long range RF, etc., data acquisition unit). In response to data collected by components of the system, the system may use a hierarchical system to address the potential hazardous conditions or safety concerns.

## Description

### BACKGROUND

People are more mobile than ever before. The number of cars, trucks, buses, recreational vehicles, and sport utility vehicles (collectively "automobiles") on the road appears to increase with each passing day. Moreover, the ongoing transportation explosion is not limited to automobiles. A wide variety of different vehicles such as motorcycles, trains, light, medium, and heavy duty trucks, construction equipment, and other transportation devices (collectively "vehicles") are used to move people and cargo from place to place. While there are many advantages to our increasingly mobile society, there are also costs associated with the explosion in the number and variety of vehicles. Accidents are one example of such a cost. It would be desirable to reduce the number of accidents and/or severity of such accidents through the use of automated or semi-automated systems configured to identify potential hazards so that potential collisions could be avoided or mitigated.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with aspects of the present invention, a vehicle safety system is provided. The system includes a plurality of sensors associated with a vehicle carrying a load including one or more sensors capable of generating one or more of vehicle load position data, weight data, and center of gravity data. The system also includes at least one vehicle control device for controlling a selected vehicle operation. The system further includes a controlling component in communication with the plurality of sensors for receiving generated thereby, and with the vehicle control device. The controlling component is capable of receiving signals generated from the plurality of sensors, and determining an impending hazardous vehicle operational state based on the generated data and vehicle path data.

In accordance with another aspect of the present invention, a method for mitigating a hazardous condition is provided. The method includes obtaining vehicle center of gravity data and one of vehicle path data and vehicle location data. The data is then processed to determine a potential hazardous condition. The vehicle operator notified of the of the potential hazardous condition. If no action is taken by the vehicle operator to mitigate the hazardous condition, safety measures are employed in an attempt to mitigate the hazardous condition.

### DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is a block diagram of one exemplary embodiment of a vehicle safety system formed in accordance with aspects of the present invention;
FIGURE 2 is a schematic diagram of one suitable vehicle in which the vehicle safety system of FIGURE 1 may be employed;
FIGURE 3 is a top view of a schematic representation of a vehicle employing the vehicle safety system of FIGURE 1;
FIGURE 4 is a flow diagram of one exemplary vehicle safety method formed in accordance with aspects of the present invention.

### DETAILED DESCRIPTION

Embodiments of the present invention will now be described with reference to the drawings where like numerals correspond to like elements. Embodiments of the present invention are generally directed to vehicle safety systems suitable for use in vehicles, such as Class 8 trucks. Although exemplary embodiments of the present invention will be described hereinafter with reference to Class 8 trucks, it will be appreciated that aspects of the present invention have wide application, and therefore, may be suitable for use with many types of electrically power, mechanically powered or hybrid powered vehicles, such as passenger vehicles, buses, commercial vehicles, etc. Accordingly, the following descriptions and illustrations herein should be considered illustrative in nature, and thus, not limiting the scope of the present invention, as claimed.

Prior to discussing the details of various aspects of the present invention, it should be understood that several sections of the following description is presented largely in terms of logic and operations that may be performed by conventional electronic components. These electronic components, which may be grouped in a single location or distributed over a wide area, generally include processors, memory, storage devices, display devices, input devices (e.g., sensors), etc. It will be appreciated by one skilled in the art that the logic described herein may be implemented in a variety of configurations, including software, hardware, or combinations thereof. The hardware may include but is not limited to, analog circuitry, digital circuitry, processing units, application specific integrated circuits (ASICs), and the like. In circumstances were the components are distributed, the components are accessible to each other via communication links.

In the following description, numerous specific details are set forth in order to provide a thorough understanding of exemplary embodiments of the present invention. It will be apparent to one skilled in the art, however, that many embodiments of the present invention may be practiced without some or all of the specific details. In some instances, well-known process steps have not been described in detail in order not to unnecessarily obscure various aspects of the present invention.

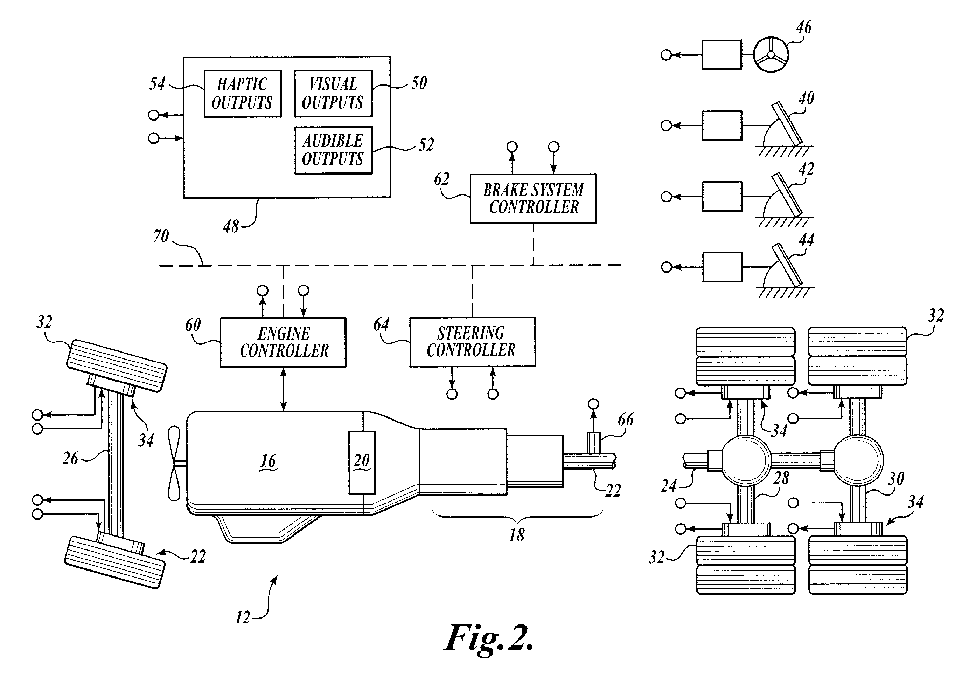

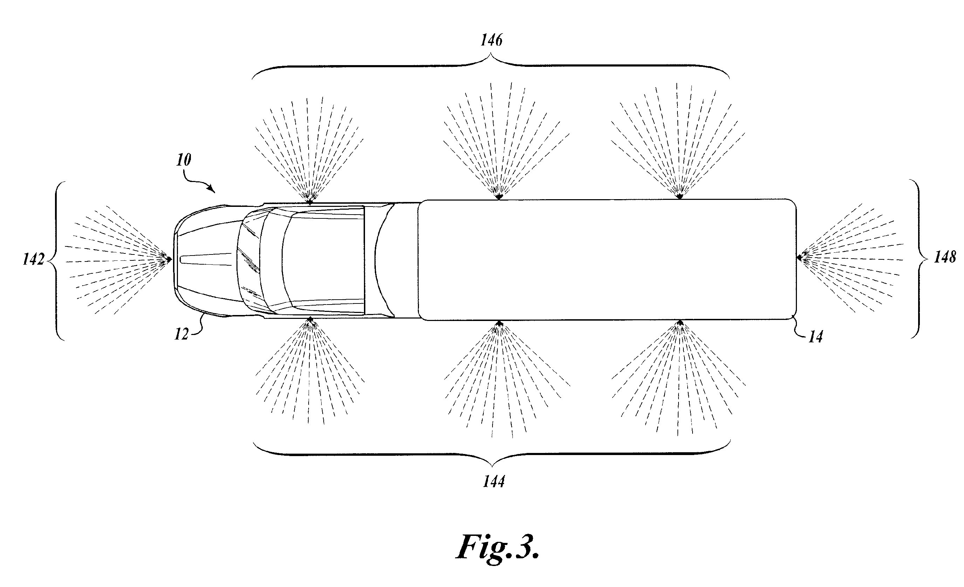

As briefly described above, embodiments of the present invention are directed to vehicle safety systems suitable for use in a vehicle. One suitable vehicle in which the vehicle safety systems may be employed will now be described in more detail with reference to FIGURE 2. As best shown in FIGURE 2, a Class 8 tractor 12 of a tractor-trailer combination 10 (hereinafter "vehicle 10" or "combination 10," see FIGURE 3), having an electronically controlled engine 16 coupled to a transmission 18 via a clutch mechanism 20 is shown. Although a vehicle such as depicted in FIGURE 2 represents one of the possible applications for the systems and methods of the present invention, it should be appreciated that aspects of the present invention transcend any particular type of vehicle.

In the embodiment shown in FIGURE 2, the transmission 18 may be an automated manual transmission or an automatic transmission that includes an output shaft 22 coupled to a vehicle drive shaft 24. The tractor 12 includes at least two axles such as a steer axle 26 and at least one drive axle, such as axles 28 and 30. Each axle supports corresponding wheels 32 having service brake components 34. The service brake components 34 may include wheel speed sensors, electronically controlled pressure valves, and the like, to effect control of the vehicle braking system.

The tractor 12 may also include conventional operator control inputs, such as an accelerator pedal 40, a service brake pedal 42, a parking brake 44, and a steering wheel 46 to effect turning of the front wheels of the vehicle 20. The tractor 12 may further include a cab mounted operator interface, which may include any of a number of output devices 48, such as visual output devices 50 (e.g., lights, displays, gauges), audible output devices 52 (e.g., speakers, headphones, etc.) and haptic feedback devices 54. The output device 48 may be stand alone, integrated with the instrument panel, with a rear view mirror or a side view mirror, mounted in, on or over a hood of the vehicle, and/or located and/or integrated with any other suitable structure in the vehicle. The cab mounted operator interface also includes various input devices (not shown), such as toggle switches, push button switches, potentiometers, or the like.

The tractor 12 is further equipped with a vehicle control system that controls several systems and subsystems of the vehicle. The vehicle control system may include a controller associated with the engine 16 ("engine controller 60"). Generally described, the engine controller 60 functions to manage various aspects of the operation of the engine 16. For example, the engine's ignition timing, fuel consumption, and the like, may be monitored and controlled by the engine controller 60. The vehicle control system may include other controllers for controlling other vehicle systems. For example, the vehicle control system may include a transmission controller (not shown) for controlling transmission shifting, a brake system controller 62 for controlling the operation of the service brake components 34, a steering controller 64 for controlling the turning of the wheels 32 of the steer axle 26.

To support this control, the various controllers communicate with each other through a vehicle-wide communications network 70, as shown in FIGURE 3. Those skilled in the art and others will recognize that the vehicle-wide communications network 70 may be implemented using any number of different communication protocols such as, but not limited to, Society of Automotive Engineers' ("SAE") J1587, SAE J1922, SAE J1939, SAE J1708, and combinations thereof. Alternatively, one or more of the aforementioned controllers may be software control modules contained within a general purpose controller residing on the vehicle. It will be appreciated, however, that embodiments of the present invention is not limited to any particular type or configuration of controller, or to any specific control logic for governing operation of vehicle 10.

As used herein, controllers, control units, control modules, program modules, etc., can contain logic for carrying out general or specific operational features of the vehicle 10. The logic can be implemented in hardware components, such as analog circuitry, digital circuitry, processing units, or combinations thereof, software components having instructions which can be processed by the processing units, etc., or combinations of hardware and software. Therefore, as used herein, the term "controlling component" can be used to generally describe these aforementioned components, and can be either hardware or software, or combinations thereof, that implement logic for carrying out various aspects of the present invention.

Referring now to FIGURE 2, there is shown a block diagram of one exemplary embodiment of a vehicle safety system 100 formed in accordance with aspects of the present invention. Generally described, the vehicle safety system 100 is incorporated into a vehicle, referred to as the "host" vehicle, such as vehicle 10, whereby it monitors the vehicle surroundings and the operational characteristics of the host vehicle in order to identify potential safety concerns or hazardous operational conditions. This may include detecting a foreign object (e.g. a target object) outside of the host vehicle that could pose a potential threat to the host vehicle. The system 100 is capable of detecting a wide variety of different target objects, including both moving and non-moving objects. For example, the target object 106 can be an oncoming vehicle (e.g., a "lead vehicle"), a vehicle in an adjacent lane (e.g., a "side vehicle") or a vehicle approaching the host vehicle from behind (e.g., a "rear trailing vehicle"). The target object may also be a pedestrian crossing the road ahead of the host vehicle or stationary objects, such as trees, barriers, buildings, etc., on the periphery of the roadway. The system 100 is also capable of detecting other hazardous conditions, such as host vehicle roll-over conditions, jack-knife conditions, etc.

In doing so, the vehicle safety system 100 collects data from one or more sources, such as sources that generate data from the vehicle itself (e.g., internal sensors), sources that generate data from the surroundings of the vehicle (e.g., external sensors), and sources that receive data from local or remote locations with respect to the host vehicle (e.g., a satellite, telematic, cellular, short or long range RF, etc., data acquisition unit). In response to data collected by components of the system 100, the system 100 may use a hierarchical system to address the potential hazardous conditions or safety concerns. For example, in one embodiment, the system 100 first warns the operator of the host vehicle either visually, audibly and/or haptically of an impending safety concern or hazard, such as a collision, and if no corrective action is taken by the host vehicle operator, the system 100 may enable active countermeasures, e.g., steering control, braking control, throttle control, etc. to take autonomous corrective action to mitigate the safety concern or hazard and/or enable passive countermeasures, such as the deployment of airbags, adjustment of seat restraints and head restraints, etc. In one embodiment, the system 100 may transmit data indicative of the countermeasures employed to external sources via the data acquisition and transmission unit 156, if desired. The external sources may include but are not limited to vehicles in proximity of the host vehicle, stationary relays located roadside, etc.

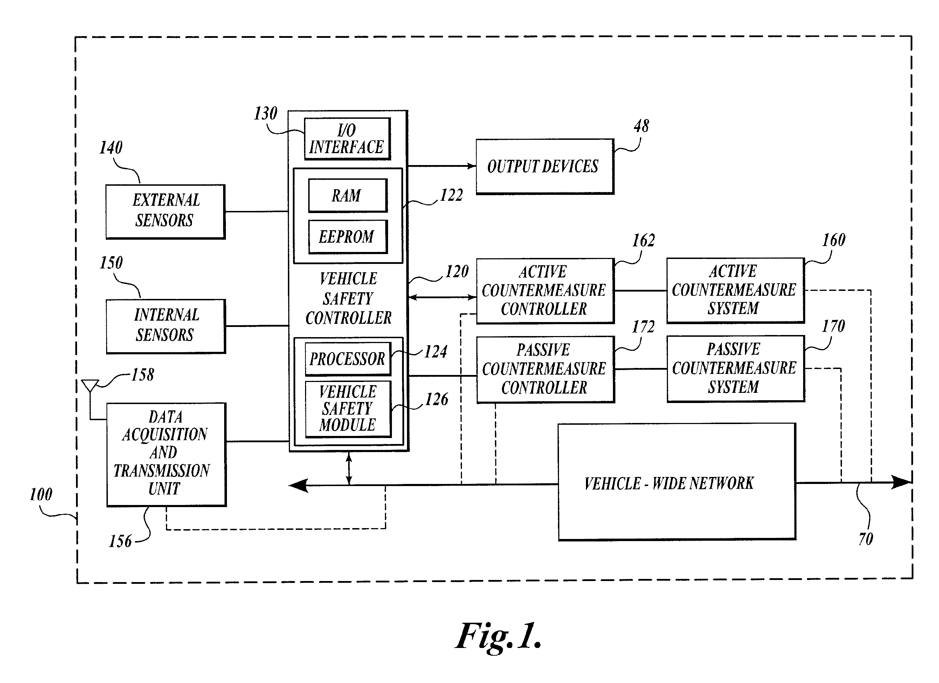

Still referring now to FIGURE 1, the components of the vehicle safety system 100 will now be described in more detail. As best shown in FIGURE 1, the vehicle safety system 100 includes a vehicle safety controller 120, which may be communicatively connected to other systems of the vehicle 10 via the vehicle-wide network 70. The controller 120 and any one of the various sensors, actuators, etc., herein described may contain logic rules implemented in a variety of combinations of hardware circuitry components, software and/or programmed microprocessors, etc., to effect control of the various vehicle systems and subsystems described herein. To that end, as further illustrated in FIGURE 1, one suitable embodiment of the controller 120 includes a memory 122 with a Random Access Memory ("RAM"), an Electronically Erasable, Programmable, Read-Only Memory ("EEPROM"), and any other suitable data storage means, a processor 124, and a vehicle safety module 126 for effecting vehicle safety functionality to the vehicle. Vehicle safety functionality may include adaptive cruise control, autonomous driving, collision avoidance, collision warning, lane departure warning, lane change/merge detection, rear impact collision warning/avoidance, road condition detection, just to name a few. The processor 124 and memory 122 of the controller 120 are connected by an input/output (I/O) interface 130 to other devices and/or modules of the vehicle 10.

The vehicle safety system 100 also includes a plurality of external sensors 140 and internal sensors 150, which are connected in communication with the controller 120 either directly, wirelessly, and/or through the vehicle-wide network 70. These sensors 140 and 150 are used for various purposes including but not limited to: object detection, path prediction, environment scanning, collision assessment, passenger and/or load position assessment, and other safety purposes.

The external sensors 140 include but are not limited to radar, lidar, optical sensors, ultrasonic sensors, active and passive infrared sensors, radio frequency (RF) sensors, camera sensors, etc. In use, for example, a single or combination of the external sensors 140 is capable of generating surroundings status signals, which may, for example, contain a camera scene or an infrared scene of the environment surrounding the vehicle 10. The external sensors 140 may determine an object's relative position to the vehicle 10, an object relative velocity to the vehicle 10, and other object identification parameters known in the art. The external sensors 140 are connected to the vehicle in one or more desired sensing locations. As can be appreciated, the location and number of sensors that are used will depend upon the particular application and can be readily modified as conditions dictate. In the embodiment shown in FIGURE 3, the external sensors 140 are placed around the tractor 12 and trailer 14 of the combination 10 so as to form a forward sensing zone 142, side sensing zones 144 and 146, and a rear sensing zone 148.

The internal sensors 150 include various vehicle system sensors including brake sensors, a throttle sensor, a suspension sensor, tire pressure sensors, vehicle inertial sensor(s), a wheel speed sensor, a vehicle speed sensor, a seat belt sensor, temperature sensors, accelerometers, a steering angle sensor, etc. In accordance with aspects of the present invention, the internal sensors 150 may also include weight measurement sensors and load monitoring sensors that generate signals indicative of weight, position, etc. of vehicle passengers and/or vehicle cargo loads.

The above sensors may be used individually or in conjunction with each other. For example, the vehicle inertial sensor(s), the vehicle speed sensor, and the steering wheel angle sensor may be used in coordination to generate a signal or signals indicative of vehicle path data or vehicle trajectory data, such as traveling on or approaching a curved road. The inertial sensor(s) may allow the system 100 to determine vehicle parameters such as yaw of the vehicle 10. The inertial sensor preferably provides the yaw rate of the vehicle about the center of gravity of the vehicle. The yaw rate measures the rotational tendency of the vehicle about an axis (i.e., Z axis) normal to the surface of the road. The steering wheel angle sensor provides a steering wheel angle signal to controller 120. The steering wheel angle signal corresponds to the steering wheel angle of the steering wheel 46 of the vehicle 10. The inertial sensor(s) may also allow the system 100 to determine the roll rate and pitch rate of the vehicle 10 about the center of gravity of the vehicle or components thereof (i.e., the tractor 12, the trailer 14, etc.), and can be used to determine the center of gravity of vehicle. The roll rate and the pitch rate measure the rotational tendency of the vehicle about the X axis and Y axis, respectively. The vehicle inertial sensors may work seperately or in conjunction with other sensors, such as the weight measurement sensors, accelerometers, load monitoring sensors, etc.

The vehicle safety system 100 further includes a data acquisition and transmission unit 156 that comprises one or more transceivers 158 that receives, for example, relative vehicle location data (e.g., GPS/map data), weather data, safety data from short-range communication devices, for example, roadside relays, beacons, etc., and vehicle operational data from other vehicles in the vicinity of the host vehicle. The transceivers 158 may also transmit location data, weather data, host vehicle data, etc., to vehicle safety systems of other vehicles, stationary relays located roadside, etc.

The data acquisition and transmission unit 156 in one embodiment acts like a vehicle positioning system for identifying the relative location of the vehicle and generating vehicle position indicating signals relative to a fixed coordinate system. The data acquisition unit 156 may include a Global Positioning System (GPS) to carry out this functionality. The data acquisition unit 156 also preferably includes a position translation system that is able to identify the position of the vehicle relative to roads, cities, and/or any other criteria based on the output of the vehicle positioning system. The data acquisition unit 156 can also be a cellular based system or any other system that identifies the location of the vehicle relative to a fixed coordinate system. The data acquisition unit 156 may further include a data store having lookup information and/or other structured data and/or tables.

In use, the controller 120 determines the potential for a collision between the vehicle 10 and a target object, or other hazardous condition, such as vehicle roll over conditions. The controller 120 gathers various data from multiple sources, such as external sensors 140, internal sensors 150, and the data acquisition and transmission unit 156, to assess the current situation that the vehicle 10 is encountering. The controller 120 may generate various object related data from the various data sources including: probability that a collision may occur, time until a potential collision may occur, point of collision, object identification, and other object related parameters; and various vehicle parameter related data including: vehicle path determination, road condition assessment, relative location assessment, load monitoring; roll over assessment.

The controller 120, in response to data obtained by the internal sources, external sources, and the data acquisition unit 156, determines whether any action should be performed. If the system 100 determines that action should occur, in one embodiment, the controller 120 first generates a collision-warning signal or other hazardous condition warning, which is indicated to the host vehicle operator via the output devices 48. For example, the controller 120 may supply warning signals, collision-related information, external-warning signals to objects or pedestrians located outside of the vehicle, or other information.

Other actions may also be taken at the direction of the controller 120. For example, other actions may be taken if the host vehicle operators fails to take corrective action in response the vehicle safety system generated warnings. To that end, the vehicle safety system 100 further includes active and passive countermeasure systems 160 and 170, which can be controlled by active and passive countermeasure controllers 162 and 172, at the direction of the controller 120. The active countermeasure systems 160 include brake control, throttle control, steering control, suspension control, transmission control, and other chassis control systems. The active countermeasure controller 162 in response to appropriate signals from the controller 120 transmits signals to control one or more of the active countermeasures, as needed, so as to prevent a collision, injury, vehicle damage, or the like. The active countermeasure controller 162 may autonomously operate the vehicle 10 using the active countermeasure systems. The passive countermeasure systems 170 are signaled via the passive countermeasure controller 172. The passive countermeasure system 170 includes internal air bag control, seatbelt control, head restraint control, pretensioner control, etc. Air bag control may include control over front, side, curtain, hood, dash, or other type air bags.

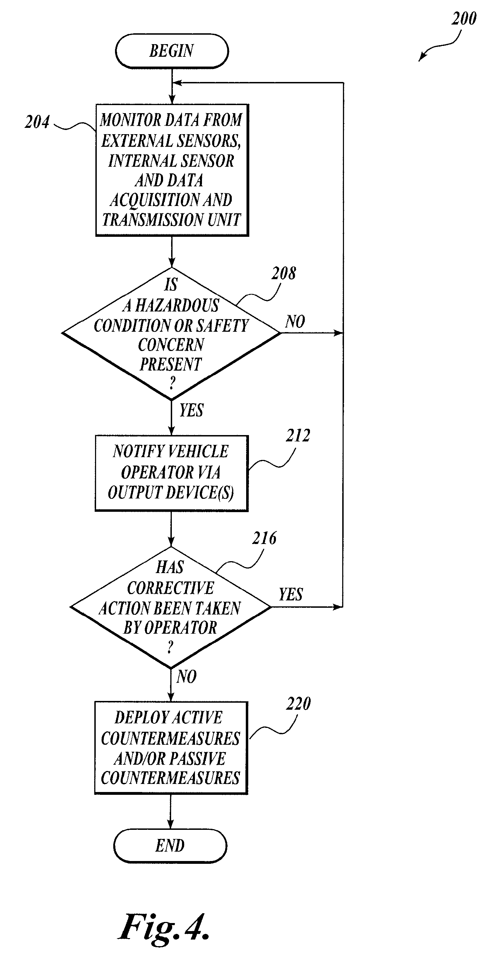

Referring now to FIGURE 4, there is shown a flow diagram of one exemplary vehicle safety method 200 implemented by the vehicle safety system 100 in accordance with aspects of the present invention. Generally described, the controller 120 continuously monitors data from the external sensors 140, internal sensors 150, and/or other data sources, such as the data acquisition and transmission unit 156, at block 204. The controller 120 processes such data, and determines whether a hazardous condition or safety concern is present at block 208. In response to the determination that a hazardous condition or safety concern is present, the controller 120 operates under a priority system that first outputs warning signals, such as audible and/or visual signals, at block 212, to alert the driver of the host vehicle to the presence of unsafe or hazardous conditions and, if no corrective measure is taken by the host vehicle operator at block 216, the controller 120 outputs control signals to the active countermeasure system and/or passive countermeasure system at block 220. For example, the controller 120 may autonomously control one or more host vehicle systems, such as the braking system, the steering system, or the engine, to alter vehicle operation, for example, vehicle braking, lane changing, etc., in the event of an impending collision or other safety hazard.

In one embodiment, the controller 120 may direct the transmission of data indicative of the countermeasures employed to external sources via the data acquisition and transmission unit 156. The external sources may include but are not limited to vehicles in proximity of the host vehicle, stationary relays located roadside, etc.

The following is one example in which the vehicle safety method is employed by the host vehicle for mitigating a potential hazardous condition or safety concern. In this example, the vehicle 10 incorporating the vehicle safety system 100, the host vehicle, is heavily laden with cargo to transport. As the vehicle 10 traverses a roadway, the vehicle safety system 100 continuously monitors data from the sensors 140 and 150 and data from the data acquisition and transmission unit 156. In this example, the controller 120 continuously processes various data, and determines that the center of gravity of the vehicle is rather high due to the nature of the cargo's positioning. In one embodiment, the data processed includes vehicle and cargo weight data, load monitoring data, vehicle inertial data, center of gravity data, etc.

The controller 120 also monitors other data, including vehicle speed data, vehicle path data, and determines that the vehicle 10 is either approaching a curve in the road or that the vehicle has entered a curve in the road. In one embodiment, the vehicle path data may be calculated based on vehicle inertial data, vehicle steering angle data, and/or vehicle speed data. In another embodiment, the vehicle path data is calculated by data obtained by the data acquisition and transmission unit 156, including GPS data and/or map data. Based on, for example, the processed vehicle path data, the vehicle speed, vehicle weight, and center of gravity of the vehicle, the system determines that the vehicle 10 is traveling at too high a rate of speed to safely negotiate the approaching curve.

In response to this determination, the vehicle safety system 100 first warns the operator either audibly, visually, or haptically, via output devices 48. If the vehicle operator ignores the warning or is unable to take corrective action, the vehicle safety system 100 then begins a series of active steps to obviate the hazardous condition, including, for example, de-fueling the engine or other braking actions, such as activating the brakes, to reduce vehicle speed. If these active measures are ineffective, the system, using the continuously generated data from sensors 140 and 150, monitors, for example, traffic in on-coming and adjacent lanes, and if altering the steering input will not endanger adjacent or oncoming traffic, the vehicle safety system 100 may alter the steering input to lessen the risk of a rollover or serious accident. The vehicle safety system 100 may also deploy passive countermeasures, such as seat belt restraints, air bags, etc., to mitigate the severity of the hazardous condition. In one embodiment, the controller 120 may direct the transmission of data indicative of the countermeasures employed to external sources via the data acquisition and transmission unit 156. The external sources may include but are not limited to vehicles in proximity of the host vehicle, stationary relays located roadside, etc.

While illustrative embodiments have been illustrated and described, it will be appreciated that various changes can be made therein without departing from the spirit and scope of the claimed subject matter.

## Claims

1. A vehicle safety system, comprising:
a plurality of sensors associated with a vehicle carrying a load, including one or more sensors capable of generating one or more of vehicle load position data, weight data, and center of gravity data;
at least one vehicle control device for controlling a selected vehicle operation; and
a controlling component in communication with the plurality of sensors for receiving data generated thereby, and in communication with the vehicle control device, the controlling component being capable of receiving signals generated from the plurality of sensors and vehicle path data from an associated device and determining an impending hazardous vehicle operational state based on the generated data and vehicle path data.

2. The vehicle safety system of Claim 1, further comprising an output device for alerting the vehicle operator of the impending hazardous vehicle operational state.

3. The vehicle safety system of Claim 2, wherein the output device is selected from a group consisting of audible devices, visual devices, and haptic devices.

4. The vehicle safety system of Claims 2 or 3, further comprising at least one operator input device, wherein the controlling component controls the vehicle control device if no corrective input from the operator input device is detected by the controlling component.

5. The vehicle safety system of Claim 4, wherein the at least one operator input device is selected from a group consisting of a steering wheel, an accelerator pedal, and a brake pedal.

6. The vehicle safety system of Claims 1-5, further comprising a data acquisition unit, wherein the vehicle path data is obtained from a source external the vehicle via the data acquisition unit.

7. The vehicle safety system of Claim 6, wherein the vehicle path data is location data, GPS data and/or map data.

8. The vehicle safety system of Claims 1-7, wherein the controlling component includes a roadway curve determination means for determining the curve in the roadway based on signals generated by one or more of the plurality of sensors.

9. The vehicle safety system of Claims 1-8, wherein the plurality of sensors are selected from a group consisting of radar, lidar, optical sensors, ultrasonic sensors, active and passive infrared sensors, radio frequency (RF) sensors, camera sensors, brake sensors, a throttle sensor, a suspension sensor, tire pressure sensors, vehicle inertial sensor(s), a wheel speed sensor, a vehicle speed sensor, a seat belt sensor, accelerometers, and a steering angle sensor.

10. The vehicle safety system of Claims 1-9, wherein the selected vehicle operation is selected from a group consisting of steering control, braking control, and throttle control.

11. The vehicle safety system of Claims 1-5, 8 or 9, wherein the vehicle path data is obtained from one or more sensors of the plurality of sensors.

12. A method for mitigating a hazardous condition, comprising the steps of:
obtaining vehicle center of gravity data and one of vehicle path data and vehicle location data;
processing said data to determine a potential hazardous condition;
notifying the vehicle operator of said potential hazardous condition;
if no action is taken by the vehicle operator to mitigate the hazardous condition;
employing safety measures in an attempt to mitigate the hazardous condition.

13. The method of Claim 12, wherein the vehicle location data is obtained from a GPS receiving unit or is generated by a plurality of sensors located on the vehicle.

14. The method of Claims 12 or 13, wherein the safety measures are passive countermeasures or active countermeasures.

15. The method of Claim 14, wherein the passive countermeasures are selected from a group consisting of air bag deployment and seat belt tensioning and the active countermeasures are selected from a group consisting of steering control, braking control, and throttle control.
